# EUROPEAN PATENT APPLICATION

(11) **EP 4 161 031 A1**
(43) Date of publication of application: **05.04.2023**
(21) Application number: 22165897.4
(22) Date of filing: 31.03.2022
(51) Int. Cl.: H04L 51/046, H04L 51/224

(54) **METHOD FOR REMINDER OBJECT OPERATION**

(30) Priority: 30.09.2021 CN 202111160359
(71) Applicant: Beijing Dajia Internet Information Technology Co., Ltd., Beijing 100085 (CN)
(72) Inventor: DONG, Xuechun, Beijing, 100085 (CN); LI, Xiyu, Beijing, 100085 (CN); CHEN, Jiaxin, Beijing, 100085 (CN); ZHANG, Bolin, Beijing, 100085 (CN); JIAO, Jian, Beijing, 100085 (CN)
(74) Representative: Canzler & Bergmeier Patentanwälte Partnerschaft mbB

(57) **Abstract**

A method for reminder object operation, relates to the field of Internet technology. The method includes: displaying (S201; S601; S801; S901) a dialogue page, wherein the dialogue page comprises an information editing area and an object display interface, the object display interface comprises identification information of a plurality of reminder objects and operation controls corresponding to the plurality of reminder objects; and receiving (S903) an operation instruction triggered separately based on at least one of the operation controls in the object display interface, and displaying reminder objects corresponding to the at least one of the operation controls in the information editing area, the object display interface being displayed in the dialogue page.

## Description

### FIELD

The disclosure relates to the field of Internet technology, and more particularly, to a method and an apparatus for reminder object operation, an electronic device and a storage medium.

### BACKGROUND

With the development of the Internet and the popularization of personal computers, instant messaging (IM) services have also been widely used. Instant messaging users can add other frequently contacted users into a list of friends (or contacts), and initiate real-time conversations with them at any time, so as to achieve the purpose of real-time communication. Many netizens are accustomed to logging in to an instant messaging software immediately when turning on a computer or a mobile terminal, so as to keep in touch with their friends at any time.

With the development of user needs, in addition to ordinary one-to-one communication in instant messaging, instant messaging software also develops functions for multi-person communication, such as establishing a group and pulling friends into the group. In order to enable friends to read information in time, the instant messaging software also develops a reminder function.

### SUMMARY

According to embodiments of the disclosure, a method for reminder object operation is provided. The method includes: displaying a dialogue page, the dialogue page including an information editing area and an object display interface, the object display interface including identification information of a plurality of reminder objects and operation controls corresponding to the plurality of reminder objects; and receiving an operation instruction triggered separately based on at least one of the operation controls in the object display interface, and displaying reminder objects corresponding to the at least one of the operation controls in the information editing area, the object display interface being displayed in the dialogue page.

In some embodiments, the at least one of the operation controls includes a first operation control and a second operation control. Receiving an operation instruction triggered separately based on at least one of the operation controls in the object display interface, and displaying reminder objects corresponding to the at least one of the operation controls in the information editing area, the object display interface being displayed in the dialogue page, includes: in response to a first operation instruction triggered based on the first operation control, displaying a first reminder object corresponding to the first operation control in the information editing area, the object display interface locating in the dialogue page; and in response to a second operation instruction triggered based on the second operation control, displaying a second reminder object corresponding to the second operation control in the information editing area, the object display interface locating in the dialogue page.

In some embodiments, the method further includes: in a case of displaying the reminder object corresponding to the first operation control in the information editing area, in response to a third operation instruction triggered based on the first operation control, deleting the reminder object corresponding to the first operation control from the information editing area, the object display interface locating in the dialogue page; and/or in a case of displaying the reminder object corresponding to the second operation control in the information editing area, in response to a fourth operation instruction triggered based on the second operation control, deleting the reminder object corresponding to the second operation control from the information editing area, the object display interface locating in the dialogue page.

In some embodiments, the method further includes: in a case of displaying the reminder object corresponding to the first operation control in the information editing area, displaying the first operation control in the object display interface in a preset state; and/or in a case of displaying the reminder object corresponding to the second operation control in the information editing area, displaying the second operation control in the object display interface in the preset state.

In some embodiments, the operation controls are first-type operation controls, the object display interface further includes second-type operation controls corresponding to the plurality of reminder objects. After displaying the dialogue page, the method further includes: in response to a fifth operation instruction triggered based on a third operation control in the second-type operation controls, displaying a reminder object corresponding to the third operation control in the information editing area; and hiding the object display interface.

In some embodiments, the method further includes: in a case of displaying the reminder object corresponding to the first operation control in the information editing area, in response to a sixth operation instruction triggered based on a fourth operation control, deleting the reminder object corresponding to the first operation control from the information editing area. The fourth operation control is the second-type operation control, and the first operation control and the fourth operation control correspond to a same reminder object.

In some embodiments, after displaying the dialogue page, the method further includes: obtaining first object editing information of the information editing area; and displaying identification information of a first reminder object matching the first object editing information, and a first-type operation control corresponding to the first reminder object in the object display interface, or displaying the identification information of the first reminder object, the first-type operation control corresponding to the first reminder object, and a second-type operation control corresponding to the first reminder object in the object display interface.

In some embodiments, the object display interface further includes an input box. After displaying the dialogue page, the method further includes: receiving second object editing information in the input box; and displaying identification information of a second reminder object matching the second object editing information, and a first-type operation control corresponding to the second reminder object in the object display interface, or displaying the identification information of the second reminder object, the first-type operation control corresponding to the second reminder object, and a second-type operation control corresponding to the second reminder object in the object display interface.

In some embodiments, displaying a dialogue page includes: displaying the dialogue page, the dialogue page including the information editing area; and receiving an object displaying instruction in the information editing area, and displaying the object display interface in the dialogue page, the object display interface floating over the dialogue page.

In some embodiments, the method further includes: hiding the object display interface in response to receiving a hiding instruction of the object display interface.

According to embodiments of the disclosure, an apparatus for reminder object operation is provided. The apparatus includes: a page displaying module, configured to display a dialogue page, the dialogue page including an information editing area and an object display interface, the object display interface including identification information of a plurality of reminder objects and operation controls corresponding to the plurality of reminder objects; and an object displaying module, configured to receive an operation instruction triggered separately based on at least one of the operation controls in the object display interface, and display reminder objects corresponding to the at least one of the operation controls in the information editing area, the object display interface being displayed in the dialogue page.

In some embodiments, the at least one of the operation controls includes a first operation control and a second operation control. The object displaying module is configured to: in response to a first operation instruction triggered based on the first operation control in the operation controls, display a reminder object corresponding to the first operation control in the information editing area, the object display interface locating in the dialogue page; and in response to a second operation instruction triggered based on the second operation control in the operation controls, display a reminder object corresponding to the second operation control in the information editing area, the object display interface locating in the dialogue page.

In some embodiments, the apparatus further includes: a first deleting module, configured to, in a case of displaying the reminder object corresponding to the first operation control in the information editing area, in response to a third operation instruction triggered based on the first operation control, delete the reminder object corresponding to the first operation control from the information editing area, the object display interface locating in the dialogue page; and configured to, in a case of displaying the reminder object corresponding to the second operation control in the information editing area, in response to a fourth operation instruction triggered based on the second operation control, delete the reminder object corresponding to the second operation control from the information editing area, the object display interface locating in the dialogue page.

In some embodiments, the page displaying module (1002; 1102) is configured to: in a case of displaying the reminder object corresponding to the first operation control in the information editing area, displaying the first operation control in the object display interface in a preset state; and in a case of displaying the reminder object corresponding to the second operation control in the information editing area, displaying the second operation control in the object display interface in the preset state.

According to embodiments of the disclosure, a computer-readable storage medium is provided. When instructions in the computer-readable storage medium are executed by a processor of an electronic device, the electronic device is caused to perform the method for reminder object operation according to any of the first aspect or the second aspect of embodiments of the disclosure.

The technical solutions provided in the embodiments of the disclosure at least bring the following beneficial effects.

The dialogue page is displayed, the dialogue page includes the information editing area and the object display interface, the object display interface includes identification information of the plurality of reminder objects and operation controls corresponding to the plurality of reminder objects, in response to the first operation instruction triggered based on the first operation control in the operation controls, the reminder object corresponding to the first operation control is displayed in the information editing area, the object display interface locating in the dialogue page, and in response to the second operation instruction triggered based on the second operation control in the operation controls, the reminder object corresponding to the second operation control is displayed in the information editing area, the object display interface locating in the dialogue page. In the embodiment of the disclosure, during selecting the multiple reminding objects, the object display interface is always displayed in the dialog page, rather than hidden as in the related art, so that the operation efficiency can be improved, and the time cost of communication can be reduced.

It is to be understood that both the foregoing general description and the following detailed description are exemplary and explanatory only and are not restrictive of the disclosure.

### BRIEF DESCRIPTION OF THE DRAWINGS

The drawings, which are incorporated in and constitute a part of this specification, illustrate embodiments consistent with the disclosure and, together with the description, serve to explain the principles of the disclosure, but may not constitute an improper limitation of the disclosure.
FIG. 1 is a schematic diagram illustrating an application environment according to an embodiment of the disclosure.
FIG. 2 is a flowchart of a method for reminder object operation according to an embodiment of the disclosure.
FIG. 3 is a schematic diagram illustrating a dialogue page according to an embodiment of the disclosure.
FIG. 4 is a schematic diagram illustrating a dialogue page according to an embodiment of the disclosure.
FIG. 5 is a schematic diagram illustrating a dialogue page according to an embodiment of the disclosure.
FIG. 6 is a flowchart of a method for processing an object display interface according to an embodiment of the disclosure.
FIG. 7 a schematic diagram illustrating a dialogue page according to an embodiment of the disclosure.
FIG. 8 is a flowchart of a method for processing an object display interface according to an embodiment of the disclosure.
FIG. 9 is a flowchart of a method for reminder object operation according to an embodiment of the disclosure.
FIG. 10 is a block diagram illustrating an apparatus for reminder object operation according to an embodiment of the disclosure.
FIG. 11 is a block diagram illustrating an apparatus for reminder object operation according to an embodiment of the disclosure.
FIG. 12 is a schematic diagram illustrating an electronic device for reminder object operation according to an embodiment of the disclosure.

### DETAILED DESCRIPTION

To enable those skilled in the art to better understand the technical solutions of the disclosure, the technical solutions in embodiments of the disclosure will be described clearly and completely with reference to the drawings.

It should be noted that the terms such as "first" and "second" in the specification and claims and the drawings of the disclosure are used to distinguish similar objects, and not necessarily used to describe a specific order or sequence. It should be understood that the data used in this way may be interchanged with each other under appropriate circumstances so that the embodiments of the disclosure described herein may be implemented in a sequence other than those illustrated or described herein. The implementation manners described in the following embodiments do not represent all implementation manners consistent with the disclosure. Rather, they are merely examples of apparatuses and methods consistent with some aspects of the disclosure as detailed in the appended claims.

All data about a user in the disclosure is the data authorized by the user.

In the related art, in a group, if multiple friends need to be reminded at the same time in one message, a usual process is: every time a friend is selected from a called up group member interface, the called up group member interface will disappear. This makes it necessary to frequently call up the group member interface in a process of reminding multiple friends at the same time, which makes the operation efficiency very low in the scenario of selecting friends for reminders, and thus increases the time cost of communication.

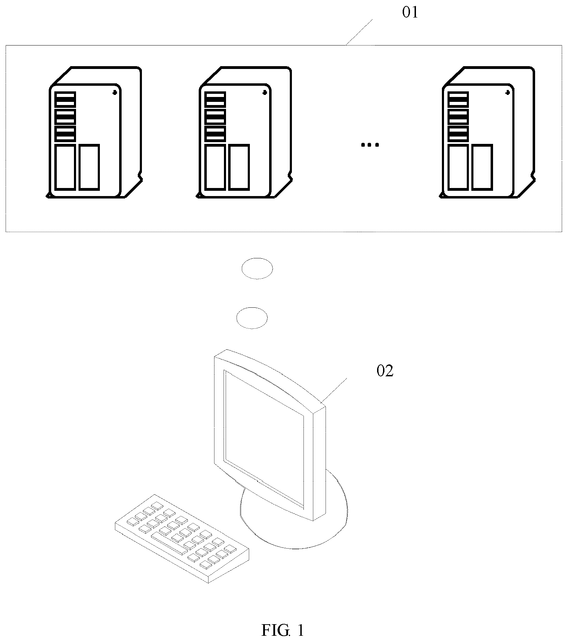

With reference to FIG. 1, FIG. 1 is a schematic diagram illustrating an application environment according to an embodiment of the disclosure. As illustrated in FIG. 1, the application environment may include a server 01 and a client 02.

In some embodiments, the client 02 can display a dialogue page. The dialogue page includes an information editing area and an object display interface. The object display interface includes identification information of each reminder object in the plurality of reminder objects, and operation controls corresponding to each reminder object. In response to a first operation instruction triggered based on a first operation control in the operation controls, a first reminder object corresponding to the first operation control is displayed in the information editing area, the object display interface locating in the dialogue page. In response to a second operation instruction triggered based on a second operation control in the operation controls, a second reminder object corresponding to the second operation control is displayed in the information editing area, the object display interface locating in the dialogue page.

In some embodiments, the client 02 can communicate with the server 01 based on a browser/server (B/S) mode or a client/server (C/S) mode. The client 02 may include, but is not limited to, smartphone, a desktop computer, a tablet computer, a laptop, a smart speaker, a digital assistant, an augmented reality (AR)/virtual reality (VR) device, a smart wearable device, and other types of client. The client 02 can also be software running on the above-mentioned client, such as an application, a mini program, and the like. In some embodiments, an operating system running on the client may include, but is not limited to, Android system, IOS system, linux, windows, Unix, etc.

The server 01 and the client 02 can establish a communication connection through wired or wireless. In some embodiments, the server 01 may include an independent physical server, a server cluster or a distributed system composed of multiple physical servers, or a cloud server that can provide basic cloud computing services such as cloud services, cloud databases, cloud computing, cloud functions, cloud storage, network services, cloud communications, middleware services, domain name services, security services, content delivery network (CDN), and big data and artificial intelligence platforms. In some embodiments, an operating system running on the server 01 may include, but is not limited to, IOS, Linux, Windows, Unix, and Android system.

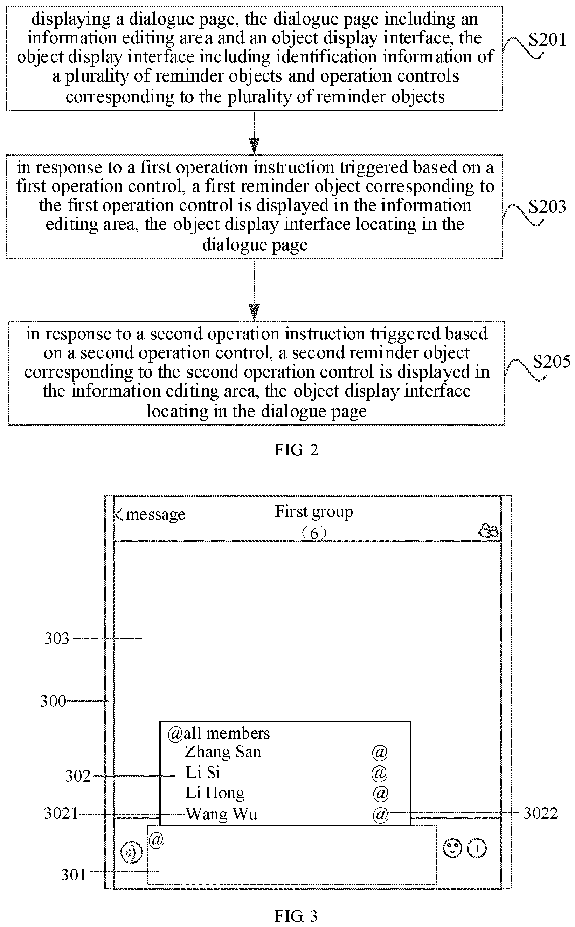

FIG. 2 is a flowchart of a method for reminder object operation according to an embodiment of the disclosure. As illustrated in FIG. 2, the method for reminder object operation may be performed by a client, and can also be performed by other node devices. The method at least includes the following S201-S205.

At block S201, a dialogue page is displayed, the dialogue page includes an information editing area and an object display interface, the object display interface includes identification information of a plurality of reminder objects and operation controls corresponding to the plurality of reminder objects.

In some embodiments of the disclosure, the dialog page displayed in step S201 includes the information editing area and the object display interface. Before obtaining the dialog page in this state, in an embodiment of the disclosure, a dialog page in an original state may be displayed. At this time, the dialog page can include the information editing area and even an information display area. Then, in response to an object display instruction, the object display interface may be displayed on the dialogue page in the original state. The object display interface may include the identification information of each reminder object of the plurality of reminder objects, and an operation control corresponding to each reminder object. FIG. 3 is a schematic diagram illustrating a dialogue page according to an embodiment of the disclosure. As illustrated in FIG. 3, it includes a dialog page 300, an information editing area 301, an information display area 303 and an object display interface 302. The object display interface 302 may include identification information 3021 of each reminder object of the plurality of reminder objects and an operation control 3022 corresponding to each reminder object. The reminder objects displayed in the object display interface 302 may be a part of all reminder objects.

In FIG. 3, the identification information of each reminder object can be represented by a user name of the reminder object, and the operation control corresponding to each reminder object can be set arbitrarily, for example, represented by "@". In another embodiment, the operation control corresponding to each reminder object may be represented by a selection box " a ".

In some possible embodiments, there may be an object display control on the dialogue page, and when the client detects an object display instruction triggered by the object display control, the object display interface may be displayed on the dialogue page. For a user, detecting the object display control by the client means that the user touches the object display control.

In other possible embodiments, when the client detects that predetermined information is input in the information editing area, an object display instruction is generated, and the client can display the object display interface on the dialog page based on the object display instruction. In some embodiments, the predetermined information may be the character "@" in the information editing area shown in FIG. 3. However, the character "@" does not limit what specific information the predetermined information may be.

In an embodiment, the object display interface may float over the dialog page. In some embodiments, the object display interface can float over the information editing area, or the object display interface can float outside the information editing area, as shown in FIG. 3, so as to not block the information editing area, such as floating over the information display area. In some embodiments, a floating position of the object display interface is adjustable.

At block 203, in response to a first operation instruction triggered based on a first operation control, a first reminder object corresponding to the first operation control is displayed in the information editing area, the object display interface locating in the dialogue page.

In an embodiment, after the terminal displays the first reminder object in the information editing area in response to the first operation instruction triggered based on the first operation control, the object display interface does not disappear, but remains staying in the dialogue page.

At block 205, in response to a second operation instruction triggered based on a second operation control, a second reminder object corresponding to the second operation control is displayed in the information editing area, the object display interface locating in the dialogue page.

In an embodiment, after the terminal displays the second reminder object in the information editing area in response to the second operation instruction triggered based on the second operation control, the object display interface does not disappear, but remains staying in the dialogue page.

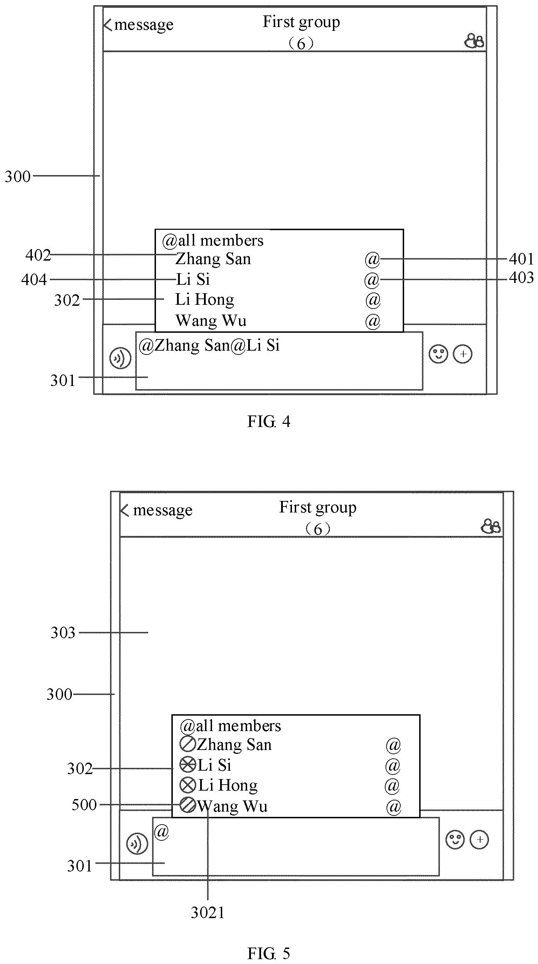

FIG. 4 is a schematic diagram illustrating a dialogue page according to an embodiment of the disclosure. As illustrated in FIG. 4, it includes a dialog page 300, an information editing area 301, and an object display interface 302. The object display interface 302 may include identification information of each reminder object of the plurality of reminder objects and an operation control corresponding to each reminder object. Description is made by using identification information "Zhang San" 402 and "Li Si" 404 of two reminder objects, and an operation control 401 corresponding to "Zhang San" and an operation control 403 corresponding to "Li Si" as examples.

Illustration is made by taking the object display interface shown in FIG. 4 as an example. In response to the first operation instruction triggered by the first operation control in the plurality of operation controls, the client may display the first reminder object in the information editing area. In some embodiments, when the client detects that the first operation control 401 is clicked, a first reminder object can be displayed in the information editing area 301. The first reminder object here can include not only the identification information "Zhang San" 402 of the first reminder object, but also a reminder symbol "@". After the first reminder object "@ Zhang San" is displayed in the information editing area, the object display interface 302 may not be exited or hidden, and the object display interface 302 may continue to be displayed in the dialog page.

In response to the second operation instruction triggered by the second operation control in the plurality of operation controls, the client may display the second reminder object in the information editing area. In some embodiments, when the client detects that the second operation control 403 is clicked, a second reminder object can be displayed in the information editing area 301. The second reminder object here can include not only the identification information "Li Si" 404 of the second reminder object, but also a reminder symbol "@". After the second reminder object "@ Li Si" is displayed in the information editing area, the object display interface 302 may not be exited or hidden, and the object display interface 302 may continue to be displayed in the dialogue page.

In some embodiments, at this time, when a reminder object corresponding to identification information of "Li Hong" is further to be added into the information editing area, the user can click the operation control corresponding to the identification information of "Li Hong", so that the client can display the reminder object corresponding to "Li Hong" in the information editing area.

In another embodiment, the operation control corresponding to each reminder object may be represented by a selection box "□". When a selection box corresponding to a reminder object is selected or checked, it means that the reminder object is selected.

In some embodiments of the disclosure, all the operation controls in the multiple operation controls, including the first operation control and the second operation control, are operation controls for the same logic. When an operation control is clicked and a reminder object corresponding to the operation control is displayed in the information editing area, the object display interface does not disappear. In this way, it is not necessary to frequently call up the object display interface in the process of reminding multiple friends at the same time, thus improving the operation efficiency and reducing the time cost of communication.

In some embodiments of the disclosure, in a case where the first reminder object is displayed in the information editing area, the client may delete the first reminder object from the information editing area in response to a third operation instruction triggered by the first operation control, with the object display interface locating in the dialog page. With reference to an example shown in FIG. 4, in a case where the first reminder object (@ Zhang San) corresponding to the first operation control 401 is displayed in the information editing area, when it is detected that the first operation control 401 is clicked again, the third operation instruction is received, and the first reminder object (@ Zhang San) is deleted from the information editing area in response to the third operation instruction. At this time, the object display interface does not disappear.

In some embodiments of the disclosure, in a case where the second reminder object is displayed in the information editing area, the client may delete the second reminder object from the information editing area in response to a fourth operation instruction triggered by the second operation control, with the object display interface locating in the dialog page. With reference to an example shown in FIG. 4, in a case where the second reminder object (@ Li Si) corresponding to the second operation control 403 is displayed in the information editing area, when it is detected that the second operation control 403 is clicked again, the fourth operation instruction is received, and the second reminder object (@ Li Si) is deleted from the information editing area in response to the fourth operation instruction. At this time, the object display interface does not disappear.

In this way, the user can perform the deletion operation of a reminder object through the object display interface, which is simple, quick and convenient.

In order to prompt the user that some reminder objects are presented in the information editing area, and to avoid accidentally deleting a reminder object from the information editing area caused by clicking an operation control again due to forgetting whether the operation control is selected, the client may display the first operation control in the object display interface in a preset state in a case where the first reminder object is displayed in the information editing area, and the second operation control in the object display interface is displayed in a preset state in a case where the second reminder object is displayed in the information editing area. In some embodiments, the first operation control and the second operation control may be converted from an original state to a preset state. For example, the original state is gray, and the preset state may be highlighted.

In some possible embodiments, when a hiding instruction of the object display interface is received, the object display interface is hidden. In some embodiments, the object display interface may further include an interface hiding control. When the client detects that the interface hiding control is clicked, the hiding instruction may be generated. That is, the client can hide the object display interface in response to the hide instruction triggered by the interface hiding control. In an embodiment, after step S205, the terminal receives an instruction for hiding the object display interface, and hides the object display interface. That is to say, before the hiding instruction is received, the user may still have objects to be reminded, and the object display interface remains displayed on the dialog page. After the hiding instruction is received, the user may complete the selection of the objects to be reminded, and the object display interface is hidden. In this way, it is not necessary to frequently call up the object display interface in the process of reminding multiple friends at the same time, thus improving the operation efficiency and reducing the time cost of communication.

In some embodiments, when it is detected that a preset area of the dialog page is clicked, a hiding instruction may be generated, and then the client may hide the object display interface based on the hiding instruction. In an example, the preset area may be in the information editing area. In another example, the preset area may be in the information display area.

In some embodiments of the disclosure, the operation control corresponding to each of above reminder objects is a first-type operation control, and the first-type operation controls are operation controls belonging to the same logic. When one of the operation control is clicked and a reminder object corresponding to the operation control is displayed in the information editing area, the object display interface may not disappear.

The object display interface also includes a second-type of operation control corresponding to each reminder object. The second-type operation control is an operation control belonging to another logic. When the second-type operation control is clicked and a third reminder object corresponding to the clicked second-type operation control is displayed in the information editing area, the object display interface disappears.

FIG. 5 is a schematic diagram illustrating a dialogue page according to an embodiment of the disclosure. As illustrated in FIG. 5, it includes a dialog page 300, an information editing area 301, an information display area 303 and an object display interface 302. The object display interface 302 may include the identification information 3021 of each reminder object of the plurality of reminder objects and a first-type operation control corresponding to each reminder object, and may also include second-type operation controls. In some embodiments, the second-type operation of each reminder object may be represented by a user image 500 shown in FIG. 5 , and may also be represented by the identification information or a user name (for example, "Wang Wu") of the reminder object.

In some embodiments, in response to a fifth operation instruction triggered based on a third operation control in the second-type operation controls, a third reminder object corresponding to the third operation control is displayed in the information editing area, and the object display interface is hidden. As illustrated in FIG. 5, when it is detected that the third operation control in the plurality of second-type operation controls is clicked, for example, the user image 500 or the identification information "Wang Wu" is clicked, the fifth operation instruction can be generated, and the third reminder object "@ Wang Wu " corresponding to the third operation control is displayed in the information editing area, and the object display interface is hidden.

This embodiment is suitable for a situation where only one user is to be reminded in the group. After the second-type operation control of the reminder is clicked, and after the third reminder object is displayed in the information editing area, the client can automatically hide the object display interface, saving operation steps.

It has been described above that a reminder object in the information editing area can be deleted by clicking the first-type operation control again. In this embodiment of the disclosure, a reminder object in the information editing area can also be deleted by clicking the second-type operation control. In some embodiments, in a case where the first reminder object is displayed in the information editing area, the client can delete first the reminder object from the information editing area in response to a sixth operation instruction triggered by a fourth operation control. The fourth operation control is a second-type operation control, and the first operation control and the fourth operation control correspond to the same reminder object.

Taking "Zhang San" as an example, the embodiments of the disclosure can also provide various implementations of how to delete the reminder object "@ Zhang San" when the reminder object "@ Zhang San" is displayed in the information editing area.

In some implementations, when the client detects that a first-type operation control corresponding to "Zhang San" is clicked, an operation instruction can be generated, and then the reminder object "@ Zhang San" can be displayed in the information editing area. At this time, the object display interface is located in the dialog page. When the user wants to delete the reminder object "@ Zhang San" in the information editing area, the user can click the first-type operation control corresponding to "Zhang San" again, and the client can generate an operation instruction again in response to the first-type operation control corresponding to "Zhang San". At this time, the operation instruction is used to instruct the client to delete the reminder object "@ Zhang San" from the information editing area. In some embodiments, the object display interface is located on the dialog page.

In some implementations, when the client detects that the first-type operation control corresponding to "Zhang San" is clicked, an operation instruction can be generated, and then the reminder object "@ Zhang San" can be displayed in the information editing area. At this time, the object display interface is located in the dialog page. When the user wants to delete the reminder object "@ Zhang San" in the information editing area, the user can click a second-type operation control corresponding to "Zhang San", and the client can generate an operation instruction again in response to the second-type operation control corresponding to "Zhang San". At this time, the operation instruction is used to instruct the client to delete the reminder object "@ Zhang San" from the information editing area. In some embodiments, the client can hide the object display interface.

In some implementations, when the client detects that a second-type operation control corresponding to "Zhang San" is clicked, an operation instruction can be generated, and then the reminder object "@ Zhang San" can be displayed in the information editing area. At this time, the object display interface is hidden. When the user wants to delete the reminder object "@ Zhang San" in the information editing area, the object display interface can be called up again, the user clicks the second-type operation control corresponding to "Zhang San". The client can generate an operation instruction again in response to the second-type operation control corresponding to "Zhang San". At this time, the operation instruction is used to instruct the client to delete the reminder object "@ Zhang San" from the information editing area. In some embodiments, the client can hide the object display interface.

In some implementations, when the client detects that a second-type operation control corresponding to "Zhang San" is clicked, an operation instruction can be generated, and then the reminder object "@ Zhang San" can be displayed in the information editing area. At this time, the object display interface is hidden. In an embodiment, when the user wants to delete the reminder object "@ Zhang San" in the information editing area, the object display interface can be called up again, the user clicks a first-type operation control corresponding to "Zhang San". The client can generate an operation instruction again in response to the first-type operation control corresponding to "Zhang San". At this time, the operation instruction is used to instruct the client to delete the reminder object "@ Zhang San" from the information editing area. In some embodiments, the object display interface can be located in the dialog page at this time. In another embodiment, when the user wants to delete the reminder object "@ Zhang San" in the information editing area, the user can input a deletion instruction after the reminder object in the editing area through a keyboard to delete the reminder object.

The above-mentioned four embodiments illustrate that no matter a certain reminder object is displayed in the information editing area based on whether the first-type operation control operation or the second-type operation control corresponding to the certain reminder object, the certain reminder object in the information editing area may be deleted when either the first-type operation control or the second-type operation control corresponding to the certain reminder object is clicked again.

In some embodiments of the disclosure, the object display interface may include identification information, a first-type operation control and a second-type operation control corresponding to each reminder object in the plurality of reminder objects. However, based on the size of the object display interface, only identification information, first-type operation controls and second-type operation controls corresponding to several reminder objects can be displayed, and identification information, first-type operation controls and second-type operation controls of other reminder objects can be replaced to display by swiping actions in the object display interface. In this way, in an embodiment, when a reminder object that the user wants to find is placed at a very rear position on the object display interface, a sliding operation may be performed on the object display interface to find the wanted reminder object. While, the user may spend a lot of time sliding on the object display interface to find the reminder object.

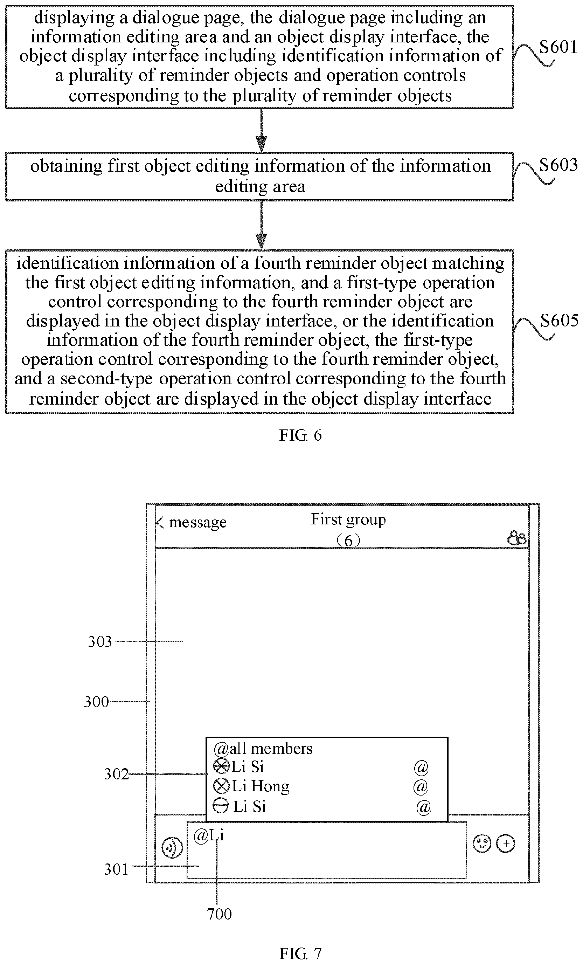

Based on this, embodiments of the disclosure provide a method for processing an object display interface. FIG. 6 is a flowchart of a method for processing an object display interface according to an embodiment of the disclosure. As illustrated in FIG. 6, the method for reminder object operation may be performed by a client, and can also be performed by other node devices. The method at least includes S601-S605.

At block S601, a dialogue page is displayed, the dialogue page includes an information editing area and an object display interface, the object display interface includes identification information of a plurality of reminder objects and operation controls corresponding to the plurality of reminder objects.

In some embodiments of the disclosure, the dialog page displayed in step S601 includes the information editing area and the object display interface. Before obtaining the dialog page in this state, in an embodiment of the disclosure, a dialog page in an original state may be displayed. At this time, the dialog page can include the information editing area and even an information display area. Then, in response to an object display instruction, the object display interface may be displayed on the dialogue page in the original state. The object display interface may include the identification information of each reminder object of the plurality of reminder objects, and an operation control corresponding to each reminder object.

In some possible embodiments, there may be an object display control on the dialogue page, and when the client detects an object display instruction triggered by the object display control, the object display interface may be displayed on the dialogue page. For a user, detecting the object display control by the client means that the user touches the object display control.

In other possible embodiments, when the client detects that predetermined information is input in the information editing area, an object display instruction is generated, and the client can display the object display interface on the dialog page based on the object display instruction. In some embodiments, the predetermined information may be the character "@" in the information editing area shown in FIG. 3. However, the character "@" does not limit what specific information the predetermined information may be.

At block S603, first object editing information of the information editing area is obtained.

FIG. 7 a schematic diagram illustrating a dialogue page according to an embodiment of the disclosure. As illustrated in FIG. 7, it includes a dialog page 300, an information editing area 301, an information display area 303 and an object display interface 302. The object display interface 302 may include the identification information of each reminder object of the plurality of reminder objects and a first-type operation control corresponding to each reminder object, and may also include second-type operation controls.

In some embodiments, as illustrated in FIG. 7, a predetermined symbol "@" is input in the information editing area 301 to evoke the object display interface. The object display interface displays all user accounts in the first group, that is, the identification information of all reminder objects. The first object editing information "Li" is continued to be entered, so that the client can obtain the first object editing information in the information editing area. In some embodiments, the client can also obtain the first object editing information "Li" through a voice component, and present the first object editing information "Li" in the information editing area. In this way, the client can obtain the first object editing information in the information editing area.

At block S605, identification information of a fourth reminder object matching the first object editing information, and a first-type operation control corresponding to the fourth reminder object are displayed in the object display interface, or the identification information of the fourth reminder object, the first-type operation control corresponding to the fourth reminder object, and a second-type operation control corresponding to the fourth reminder object are displayed in the object display interface.

In some embodiments, the client can match the first object editing information with each reminder object, so as to determine the identification information of the fourth reminder object whose identification information includes the first object editing information. The client can display the identification information of the fourth reminder object that matches the first object editing information, and the first-type operation control corresponding to the fourth reminder object on the object display interface. The client can also display the identification information of the fourth reminder object that matches the first object editing information, the first-type operation control corresponding to the fourth reminder object, and the second-type operation control corresponding to the fourth reminder object on the object display interface.

As illustrated in FIG. 7, the identification information "Li Si" of the fourth reminder object corresponding to "Li", a corresponding first-type operation control, and a corresponding second-type operation control are displayed; the identification information "Li Hong" of the fourth reminder object, a corresponding first-type operation control, and a corresponding second-type operation control are displayed; the identification information of the fourth reminder object "Li Yi", a corresponding first-type operation control, and a corresponding second-type operation control are displayed.

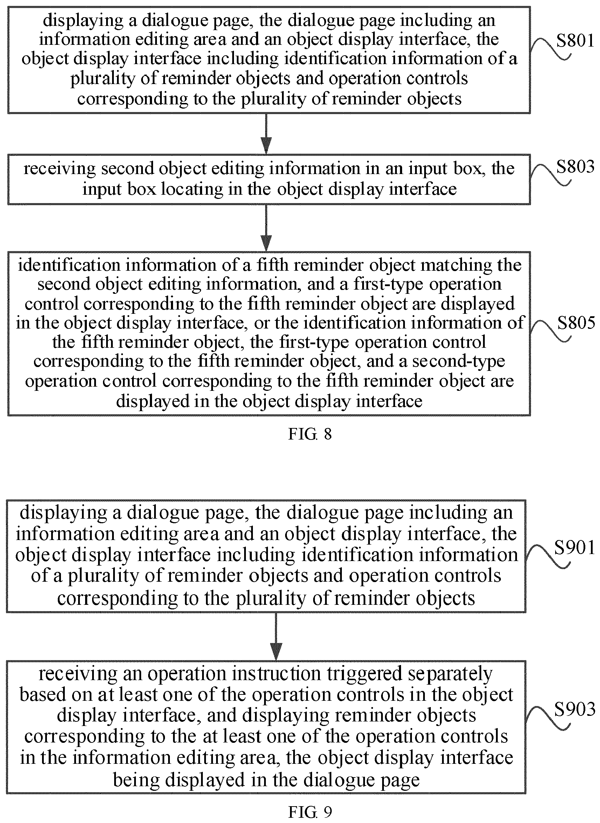

Embodiments of the disclosure provide a method for processing an object display interface. FIG. 8 is a flowchart of a method for processing an object display interface according to an embodiment of the disclosure. As illustrated in FIG. 8, the method for reminder object operation may be performed by a client, and can also be performed by other node devices. The method at least includes S801-S805.

At block S801, a dialogue page is displayed, the dialogue page includes an information editing area and an object display interface, the object display interface includes identification information of a plurality of reminder objects and operation controls corresponding to the plurality of reminder objects.

In some embodiments of the disclosure, the dialog page displayed in step S801 includes the information editing area and the object display interface. Before obtaining the dialog page in this state, in an embodiment of the disclosure, a dialog page in an original state may be displayed. At this time, the dialog page can include the information editing area and even an information display area. Then, in response to an object display instruction, the object display interface may be displayed on the dialogue page in the original state. The object display interface may include the identification information of each reminder object of the plurality of reminder objects, and an operation control corresponding to each reminder object.

At block S803, second object editing information is received in an input box, the input box is located in the object display interface.

In some embodiments, a predetermined symbol "@" is input in the information editing area to evoke an object display interface. The object display interface displays all user accounts in the first group, that is, the identification information of all reminder objects. The object display interface may further include the input box. When the second object editing information "Li" is input in the input box, the client can obtain the second object editing information in the input box. In some embodiments, the client can also obtain the second object editing information "Li" through a voice component, and present the second object editing information "Li" in the input box. In this way, the client can obtain the second object editing information in the input box.

At block S805, identification information of a fifth reminder object matching the second object editing information, and a first-type operation control corresponding to the fifth reminder object are displayed in the object display interface, or the identification information of the fifth reminder object, the first-type operation control corresponding to the fifth reminder object, and a second-type operation control corresponding to the fifth reminder object are displayed in the object display interface.

In some embodiments, the client can match the second object editing information with each reminder object, so as to determine the identification information of the fifth reminder object whose identification information includes the second object editing information. The client can display the identification information of the fifth reminder object that matches the second object editing information, and the first-type operation control corresponding to the fifth reminder object on the object display interface. The client can also display the identification information of the fifth reminder object that matches the second object editing information, the first-type operation control corresponding to the fifth reminder object, and the second-type operation control corresponding to the fifth reminder object on the object display interface.

As illustrated in FIG. 7, the identification information "Li Si" of the fifth reminder object corresponding to "Li", a corresponding first-type operation control, and a corresponding second-type operation control are displayed; the identification information "Li Hong" of the fifth reminder object, a corresponding first-type operation control, and a corresponding second-type operation control are displayed; the identification information of the fifth reminder object "Li Yi", a corresponding first-type operation control, and a corresponding second-type operation control are displayed.

In conclusion, the embodiments of the disclosure have at least the following effects:
First, all the operation controls in the multiple operation controls, including the first operation control and the second operation control, are operation controls of the same logic. When an operation control is clicked and a reminder object corresponding to the operation control is displayed in the information editing area, the object display interface does not disappear. In this way, it is not necessary to frequently call up the object display interface in the process of reminding multiple friends at the same time, thus improving the operation efficiency and reducing the time cost of communication.
Second, the user can delete the reminder object through the object display interface, which is simple, quick and convenient.
Third, in a case of remind a user in the group, after the second-type operation control of the reminder object is clicked, and after the reminder object is displayed in the information editing area, the client can automatically hide the object display interface, saving the operation steps.
Fourth, the embodiments of the disclosure supports real-time query, that is, the identification information in the object display interface can be queried in real time by editing information, and query and positioning can be implemented in real time with the change of the input value, which reduces the time cost of finding the target reminder object, and saving the operation steps.

FIG. 9 is a flowchart of a method for reminder object operation according to an embodiment of the disclosure. As illustrated in FIG. 9, the method for reminder object operation may be performed by a client, and can also be performed by other node devices. The method at least includes the following S901-S903.

At block S901, a dialogue page is displayed, the dialogue page includes an information editing area and an object display interface, the object display interface includes identification information of a plurality of reminder objects and operation controls corresponding to the plurality of reminder objects.

In some embodiments of the disclosure, the dialog page displayed in step S901 includes the information editing area and the object display interface. Before obtaining the dialog page in this state, in an embodiment of the disclosure, a dialog page in an original state may be displayed. At this time, the dialog page can include the information editing area and even an information display area. Then, in response to an object display instruction, the object display interface may be displayed on the dialogue page in the original state. The object display interface may include the identification information of each reminder object of the plurality of reminder objects, and an operation control corresponding to each reminder object.

In some possible embodiments, there may be an object display control on the dialogue page, and when the client detects an object display instruction triggered by the object display control, the object display interface may be displayed on the dialogue page. For a user, detecting the object display control by the client means that the user touches the object display control.

In other possible embodiments, when the client detects that predetermined information is input in the information editing area, an object display instruction is generated, and the client can display the object display interface on the dialog page based on the object display instruction. In some embodiments, the predetermined information may be the character "@" in the information

editing area shown in FIG. 3. However, the character "@" does not limit what specific information the predetermined information may be.

In an embodiment, the object display interface may float over the dialog page. In some embodiments, the object display interface can float over the information editing area, or the object display interface can float outside the information editing area, as shown in FIG. 3, so as to not block the information editing area, such as floating over the information display area. In some embodiments, a floating position of the object display interface is adjustable.

At block S903, an operation instruction triggered separately based on at least one of the operation controls is received in the object display interface, and reminder objects corresponding to the at least one of the operation controls are displayed in the information editing area, the object display interface being displayed in the dialogue page.

In an embodiment, the object display interface remains displayed on the dialog page during the process of displaying the reminder object corresponding to one or more operation controls. For example, taking FIG. 3 as an example, the @ corresponding to the reminder object "Zhang San" is triggered, "@ Zhang San " is displayed in the information editing area 301, and the object display interface 302 remains displayed. The @ corresponding to the reminder object "Li Si" is triggered. Triggered, "@ Li Si " is displayed in the information editing area 301, and the object display interface 302 is still displayed in the dialog page.

In some possible embodiments, the at least one of the operation controls includes a first operation control and a second operation control. Receiving an operation instruction triggered separately based on at least one of the operation controls in the object display interface, displaying reminder objects corresponding to the at least one of the operation controls in the information editing area, and the object display interface being displayed in the dialogue page, may be embodied as following.

A first operation instruction triggered based on the first operation control is received in the object display interface, and a first reminder object corresponding to the first operation control is displayed in the information editing area, the object display interface remaining displayed in the dialog page. For detail steps, reference may be made to the implementation manner corresponding to step S203.

A second operation instruction triggered based on the second operation control is received in the object display interface, and a second reminder object corresponding to the second operation control is displayed in the information editing area, the object display interface remaining displayed in the dialog page. For detail steps, reference may be made to the implementation manner corresponding to step S205.

In some possible embodiments, the object display interface is hidden in response to receiving a hiding instruction of the object display interface.

In an embodiment, the object display interface may further include an interface hiding control. When the client detects that the interface hiding control is clicked, a hiding instruction may be generated. That is, the client can hide the object display interface in response to the hide instruction triggered by the interface hiding control.

In an embodiment, when it is detected that a preset area of the dialog page is clicked, a hiding instruction may be generated, and then the client may hide the object display interface based on the hiding instruction. In an example, the preset area may be in the information editing area. In another example, the preset area may be in the information display area.

In this embodiment, before receiving the hiding instruction, the user may still have objects to be reminded, and the object display interface remains displayed on the dialog page. After receiving the hiding instruction, the user may complete the selection of the objects to be reminded, and the object display interface is hidden. In this way, it is not necessary to frequently call up the object display interface in the process of reminding multiple friends at the same time, thus improving the operation efficiency and reducing the time cost of communication.

In some embodiments of the disclosure, an operation instruction triggered based on any control in at least one operation control can be received in the object display interface, and a reminder object corresponding to the any control can be deleted from the information editing area, and the object display interface is displayed in the dialog page. Description is made by taking the operation controls corresponding to "Zhang San" and "Li Si" as examples

When the client detects that a first-type operation control corresponding to "Zhang San" is clicked, an operation instruction can be generated, and then the reminder object "@ Zhang San" can be displayed in the information editing area. At this time, the object display interface is located in the dialog page. When the user wants to delete the reminder object "@ Zhang San" in the information editing area, the user can click the first-type operation control corresponding to "Zhang San" again, and the client can generate an operation instruction again in response to the first-type operation control corresponding to "Zhang San". At this time, the operation instruction is used to instruct the client to delete the reminder object "@ Zhang San" from the information editing area. In some embodiments, the object display interface is located in the dialog page.

When the client detects that a first-type operation control corresponding to "Li Si" is clicked, an operation instruction can be generated, and then the reminder object "@ Li Si" can be displayed in the information editing area. At this time, the object display interface is located in the dialog page. When the user wants to delete the reminder object "@ Li Si" in the information editing area, the user can click the first-type operation control corresponding to "Li Si" again, and the client can generate an operation instruction again in response to the first-type operation control corresponding to "Li Si". At this time, the operation instruction is used to instruct the client to delete the reminder object "@ Li Si" from the information editing area. In some embodiments, the object display interface is located in the dialog page.

In order to determine a fourth reminder object from the identifications of the multiple reminder objects, so that the fourth reminder object can be selected into the information editing area later, in an embodiment, first object editing information of the information editing area can be obtained first. Identification information of the fourth reminder object matching the first object editing information, and a first-type operation control corresponding to the fourth reminder object are displayed in the object display interface, or the identification information of the fourth reminder object, the first-type operation control corresponding to the fourth reminder object, and a second-type operation control corresponding to the fourth reminder object are displayed in the object display interface.

In some embodiments, the client can match the first object editing information with each reminder object, so as to determine the identification information of the fourth reminder object whose identification information includes the first object editing information. The client can display the identification information of the fourth reminder object that matches the first object editing information, and the first-type operation control corresponding to the fourth reminder object on the object display interface. The client can also display the identification information of the fourth reminder object that matches the first object editing information, the first-type operation control corresponding to the fourth reminder object, and the second-type operation control corresponding to the fourth reminder object on the object display interface.

As illustrated in FIG. 7, the identification information "Li Si" of the fourth reminder object corresponding to "Li", a corresponding first-type operation control, and a corresponding second-type operation control are displayed; the identification information "Li Hong" of the fourth reminder object, a corresponding first-type operation control, and a corresponding second-type operation control are displayed; the identification information of the fourth reminder object "Li Yi", a corresponding first-type operation control, and a corresponding second-type operation control are displayed.

In order to determine a fifth reminder object from the identifications of the multiple reminder objects, so that the fifth reminder object can be selected into the information editing area later, in an embodiment, second object editing information is received in an input box. Identification information of the fifth reminder object matching the second object editing information, and a first-type operation control corresponding to the fifth reminder object are displayed in the object display interface, or the identification information of the fifth reminder object, the first-type operation control corresponding to the fifth reminder object, and a second-type operation control corresponding to the fifth reminder object are displayed in the object display interface.

In some embodiments, the client can match the second object editing information with each reminder object, so as to determine the identification information of the fifth reminder object whose identification information includes the second object editing information. The client can display the identification information of the fifth reminder object that matches the second object editing information, and the first-type operation control corresponding to the fifth reminder object on the object display interface. The client can also display the identification information of the fifth reminder object that matches the second object editing information, the first-type operation control corresponding to the fifth reminder object, and the second-type operation control corresponding to the fifth reminder object on the object display interface.

As illustrated in FIG. 7, the identification information "Li Si" of the fifth reminder object corresponding to "Li", a corresponding first-type operation control, and a corresponding second-type operation control are displayed; the identification information "Li Hong" of the fifth reminder object, a corresponding first-type operation control, and a corresponding second-type operation control are displayed; the identification information of the fifth reminder object "Li Yi", a corresponding first-type operation control, and a corresponding second-type operation control are displayed.

In conclusion, the embodiments of the disclosure have at least the following effects:
First, the operation controls in the multiple operation controls, including the first operation control and the second operation control, are operation controls of the same logic. When an operation control is clicked and a reminder object corresponding to the operation control is displayed in the information editing area, the object display interface does not disappear. In this way, it is not necessary to frequently call up the object display interface in the process of reminding multiple friends at the same time, thus improving the operation efficiency and reducing the time cost of communication.
Second, the user can delete the reminder object through the object display interface, which is simple, quick and convenient.
Third, in a case of remind a user in the group, after the second-type operation control of the reminder object is clicked, and after the reminder object is displayed in the information editing area, the client can automatically hide the object display interface, saving the operation steps.
Fourth, the embodiments of the disclosure supports real-time query, that is, the identification information in the object display interface can be queried in real time by editing information, and query and positioning can be implemented in real time with the change of the input value, which reduces the time cost of finding the target reminder object, and saving the operation steps.

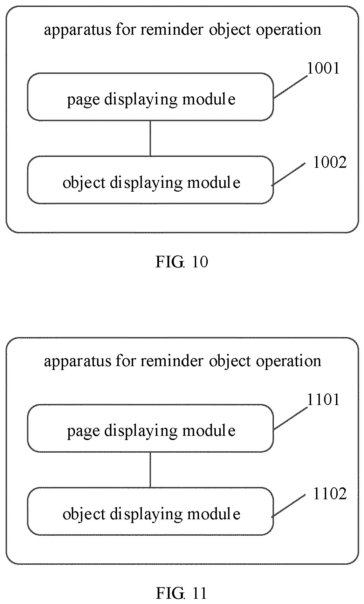

FIG. 10 is a block diagram illustrating an apparatus for reminder object operation according to an embodiment of the disclosure. As illustrated in FIG. 10, the apparatus for reminder object operation includes a page displaying module 1001 and an object displaying module1002.

The page displaying module 1001 is configured to display a dialogue page, the dialogue page including an information editing area and an object display interface, the object display interface including identification information of a plurality of reminder objects and operation controls corresponding to the plurality of reminder objects.

The object displaying module 1002 is configured to, in response to a first operation instruction triggered based on a first operation control, display a first reminder object corresponding to the first operation control in the information editing area, the object display interface locating in the dialogue page; and in response to a second operation instruction triggered based on a second operation control, display a second reminder object corresponding to the second operation control in the information editing area, the object display interface locating in the dialogue page.

In some embodiments, the apparatus further includes a first deleting module. The first deleting module is configured to, in a case of displaying the first reminder object in the information editing area, in response to a third operation instruction triggered based on the first operation control, delete the first reminder object from the information editing area, the object display interface locating in the dialogue page; and/or configured to, in a case of displaying the second reminder object in the information editing area, in response to a fourth operation instruction triggered based on the second operation control, delete the second reminder object from the information editing area, the object display interface locating in the dialogue page.

In some embodiments, the page displaying module 1001 is further configured to: in a case of displaying the first reminder object in the information editing area, display the first operation control in the object display interface in a preset state; and/or in a case of display the second reminder object in the information editing area, displaying the second operation control in the object display interface in the preset state.

In some embodiments, the operation controls are first-type operation controls, the object display interface further includes second-type operation controls corresponding to the plurality of reminder objects. The object displaying module is further configured to, in response to a fifth operation instruction triggered based on a third operation control in the second-type operation controls, display a third reminder object corresponding to the third operation control in the information editing area. The apparatus further includes: a first hiding module, configured to hide the object display interface.

In some embodiments, the apparatus further includes a second deleting module. The second deleting module is configured to, in a case of displaying the first reminder object in the information editing area, in response to a sixth operation instruction triggered based on a fourth operation control, delete the first reminder object from the information editing area. The fourth operation control is the second-type operation control, and the first operation control and the fourth operation control correspond to a same reminder object.

In some embodiments, the apparatus further includes: a first obtaining module, configured to obtain first object editing information of the information editing area; and a first information displaying module, configured to display identification information of a fourth reminder object matching the first object editing information, and a first-type operation control corresponding to the fourth reminder object in the object display interface, or display the identification information of the fourth reminder object, the first-type operation control corresponding to the fourth reminder object, and a second-type operation control corresponding to the fourth reminder object in the object display interface.

In some embodiments, the object display interface further includes an input box. The apparatus further includes: a second obtaining module, configured to receive second object editing information in the input box; and a second information displaying module, configured to display identification information of a fifth reminder object matching the second object editing information, and a first-type operation control corresponding to the fifth reminder object in the object display interface, or display the identification information of the fifth reminder object, the first-type operation control corresponding to the fifth reminder object, and a second-type operation control corresponding to the fifth reminder object in the object display interface.

In some embodiments, the page displaying module is configured to: display the dialogue page, the dialogue page including the information editing area; and receive an object displaying instruction in the information editing area, and display the object display interface in the dialogue page, the object display interface floating over the dialogue page.

In some embodiments, the apparatus further includes: a second hiding module, configured to hide the object display interface in response to receiving a hiding instruction of the object display interface.

With respect to the apparatus in the above embodiments, the specific manners for performing operations for individual modules therein have been described in detail in the embodiments regarding the methods, which will not be elaborated herein.

FIG. 11 is a block diagram illustrating an apparatus for reminder object operation according to an embodiment of the disclosure. As illustrated in FIG. 11, the apparatus for reminder object operation includes a page displaying module 1101 and an object displaying module 1102.

The page displaying module 1101 is configured to display a dialogue page, the dialogue page including an information editing area and an object display interface, the object display interface including identification information of a plurality of reminder objects and operation controls corresponding to the plurality of reminder objects.

The object displaying module 1102 is configured to receive an operation instruction triggered separately based on at least one of the operation controls in the object display interface, and display reminder objects corresponding to the at least one of the operation controls in the information editing area, the object display interface being displayed in the dialogue page.

In some embodiments, the at least one of the operation controls includes a first operation control and a second operation control. The object displaying module is configured to: receive a first operation instruction triggered based on the first operation control in the object display interface, and display a first reminder object corresponding to the first operation control in the information editing area, the object display interface remaining displayed in the dialog page; and receive a second operation instruction triggered based on the second operation control in the object display interface, and display a second reminder object corresponding to the second operation control in the information editing area, the object display interface remaining displayed in the dialog page.

In some embodiments, the apparatus further includes: a hiding module, configured to hide the object display interface in response to receiving a hiding instruction of the object display interface.

In some embodiments, the apparatus further includes: a deleting module, configured to receive, in the object display interface, an operation instruction triggered based on any operation control of the at least one of the operation controls, delete a reminder object corresponding to the any operation control from the information editing area, the object display interface being displayed in the dialog page.

In some embodiments, the apparatus further includes: a first obtaining module, configured to obtain first object editing information of the information editing area; and a first information displaying module, configured to display identification information of a fourth reminder object matching the first object editing information, and a first-type operation control corresponding to the fourth reminder object in the object display interface, or display the identification information of the fourth reminder object, the first-type operation control corresponding to the fourth reminder object, and a second-type operation control corresponding to the fourth reminder object in the object display interface.

In some embodiments, the object display interface further includes an input box, the apparatus further includes: a second obtaining module, configured to receive second object editing information in the input box; and a second information displaying module, configured to display identification information of a fifth reminder object matching the second object editing information, and a first-type operation control corresponding to the fifth reminder object in the object display interface, or display the identification information of the fifth reminder object, the first-type operation control corresponding to the fifth reminder object, and a second-type operation control corresponding to the fifth reminder object in the object display interface.

With respect to the apparatus for reminder object operation in the above embodiments, the specific manners for the respective modules to perform operations have been described in detail in the embodiments regarding the methods, which will not be elaborated herein.

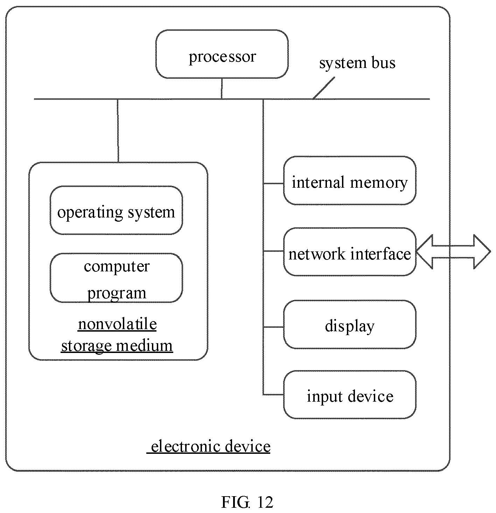

FIG. 12 is a schematic diagram illustrating an electronic device for reminder object operation according to an embodiment of the disclosure.

The electronic device may be a server or may be a terminal device. The internal structure diagram may be as illustrated in FIG. 12. The electronic device includes a processor, a memory and a network interface connected through a system bus. The processor of the electronic device is configured to provide calculation and control capabilities. The memory of the electronic device includes a nonvolatile storage medium and an internal memory. The nonvolatile storage medium stores an operating system and a computer program. The internal memory provides an environment for operations of the operating system and computer program in the nonvolatile storage medium. The network interface of the electronic device is configured to communicate with an external terminal through a network connection. The computer program is executed by the processor to realize a method for reminder object operation.

Those skilled in the art may understand that the structure in FIG. 12 is only a block diagram of a part of the structure related to the solutions of the disclosure and may not constitute a limitation on the electronic device to which the solutions of the disclosure is applied. The specific electronic device may include more or less parts than shown in the figure or combine some parts or has a different arrangement of parts.

In some embodiments, an electronic device is also provided, including: a processor; and a memory for storing instructions executable by the processor. The processor is configured to execute the instructions to perform the method for reminder object operation in the embodiments of the disclosure.

In some embodiments, a computer-readable storage medium is also provided. When instructions in the storage medium are executed by the processor of the electronic device, the electronic device may be caused to perform the method for reminder object operation in the embodiments of the disclosure.

In some embodiments, a computer program product containing instructions is also provided. The computer program product includes computer instructions. The computer instructions are stored in a readable storage medium. At least one processor of a computer device reads the computer instructions from the readable storage medium and executes the computer instructions to cause the computer device to implement the method for reminder object operation according to any of the first aspect or the second aspect of embodiments of the disclosure.

Those skilled in the art may understand that all or part of processes in the above-mentioned embodiment methods may be implemented by instructing relevant hardware through a computer program. The computer program may be stored in a nonvolatile computer-readable storage medium. When the computer program is executed, it may include procedures of the above-mentioned method embodiments. Any reference to the memory, storage, database or other media used in the embodiments provided in the disclosure may include a nonvolatile and/or volatile memory. The nonvolatile memory may include a read only memory (ROM), a programmable ROM (PROM), an electrically programmable ROM (EPROM), an electrically erasable programmable ROM (EEPROM) or a flash memory. The volatile memory may include a random access memory (RAM) or an external cache memory. As an illustration and not a limitation, RAM is available in many forms, such as static RAM (SRAM), dynamic RAM (DRAM), synchronous DRAM (SDRAM), double data rate SDRAM (DDRSDRAM), enhanced SDRAM (ESDRAM), synchlink DRAM (SLDRAM), memory bus (Rambus) direct RAM (RDRAM), direct memory bus dynamic RAM (DRDRAM), memory bus dynamic RAM (RDRAM), etc.

Those skilled in the art will easily think of other embodiments of the disclosure after considering the specification and practicing the disclosure disclosed herein. The disclosure is intended to cover any variations, uses or adaptive changes of the disclosure. These variations, uses or adaptive changes follow the general principles of the disclosure and include common knowledge or conventional technical means in the technical field that are not disclosed in the disclosure.

It will be appreciated that the disclosure is not limited to the exact construction that has been described above and illustrated in the accompanying drawings, and that various modifications and changes may be made without departing from the scope defined by the appended claims.

## Claims

1. A method for reminder object operation, comprising:
displaying (S201; S601; S801; S901) a dialogue page, wherein the dialogue page comprises an information editing area and an object display interface, the object display interface comprises identification information of a plurality of reminder objects and operation controls corresponding to the plurality of reminder objects; and
receiving (S903) an operation instruction triggered separately based on at least one of the operation controls in the object display interface, and displaying reminder objects corresponding to the at least one of the operation controls in the information editing area, the object display interface being displayed in the dialogue page.

2. The method as claimed in claim 1, wherein the at least one of the operation controls comprises a first operation control and a second operation control, said receiving (S903) an operation instruction triggered separately based on at least one of the operation controls in the object display interface, and displaying reminder objects corresponding to the at least one of the operation controls in the information editing area, the object display interface being displayed in the dialogue page, comprises:
in response to a first operation instruction triggered based on the first operation control, displaying (S203) a first reminder object corresponding to the first operation control in the information editing area, the object display interface locating in the dialogue page; and
in response to a second operation instruction triggered based on the second operation control, displaying (S205) a second reminder object corresponding to the second operation control in the information editing area, the object display interface locating in the dialogue page.

3. The method as claimed in claim 2, further comprising at least one of:
in a case of displaying the first reminder object in the information editing area, in response to a third operation instruction triggered based on the first operation control, deleting the first reminder object from the information editing area, the object display interface locating in the dialogue page; and
in a case of displaying the second reminder object in the information editing area, in response to a fourth operation instruction triggered based on the second operation control, deleting the second reminder object from the information editing area, the object display interface locating in the dialogue page.

4. The method as claimed in claim 2 or 3, further comprising at least one of:
in a case of displaying the first reminder object in the information editing area, displaying the first operation control in the object display interface in a preset state; and
in a case of displaying the second reminder object in the information editing area, displaying the second operation control in the object display interface in the preset state.

5. The method as claimed in any of claims 1 to 4, wherein the operation controls are first-type operation controls, the object display interface further comprises second-type operation controls corresponding to the plurality of reminder objects;
the method further comprises:
in response to a fifth operation instruction triggered based on a third operation control in the second-type operation controls, displaying a third reminder object corresponding to the third operation control in the information editing area; and
hiding the object display interface.

6. The method as claimed in claim 5, further comprising:
in a case of displaying the first reminder object in the information editing area, in response to a sixth operation instruction triggered based on a fourth operation control, deleting the first reminder object from the information editing area;
wherein the fourth operation control is the second-type operation control, and the first operation control and the fourth operation control correspond to a same reminder object.

7. The method as claimed in any of claims 1 to 5, further comprising:
obtaining (S603) first object editing information of the information editing area; and
displaying (S605) identification information of a fourth reminder object matching the first object editing information, and a first-type operation control corresponding to the fourth reminder object in the object display interface, or displaying the identification information of the fourth reminder object, the first-type operation control corresponding to the fourth reminder object, and a second-type operation control corresponding to the fourth reminder object in the object display interface.

8. The method as claimed in any of claims 1 to 6, wherein the object display interface further comprises an input box, the method further comprises:
receiving (S803) second object editing information in the input box; and
displaying (S805) identification information of a fifth reminder object matching the second object editing information, and a first-type operation control corresponding to the fifth reminder object in the object display interface, or displaying the identification information of the fifth reminder object, the first-type operation control corresponding to the fifth reminder object, and a second-type operation control corresponding to the fifth reminder object in the object display interface.

9. The method as claimed in any of claims 1 to 8, wherein said displaying (S201; S601; S801; S901) a dialogue page comprises:
displaying the dialogue page, the dialogue page comprising the information editing area; and
receiving an object displaying instruction in the information editing area, and displaying the object display interface in the dialogue page, wherein the object display interface floats over the dialogue page.

10. The method as claimed in any of claims 1 to 9, further comprising:
hiding the object display interface in response to receiving a hiding instruction of the object display interface.

11. An apparatus for reminder object operation, comprising:
a page displaying module (1001; 1101), configured to display a dialogue page, wherein the dialogue page comprises an information editing area and an object display interface, the object display interface comprises identification information of a plurality of reminder objects and operation controls corresponding to the plurality of reminder objects; and
an object displaying module (1002; 1102), configured to receive an operation instruction triggered separately based on at least one of the operation controls in the object display interface, and display reminder objects corresponding to the at least one of the operation controls in the information editing area, the object display interface being displayed in the dialogue page.

12. The apparatus as claimed in claim 11, wherein the at least one of the operation controls comprises a first operation control and a second operation control, the object displaying module (1002; 1102) is configured to:
in response to a first operation instruction triggered based on the first operation control in the operation controls, display a reminder object corresponding to the first operation control in the information editing area, the object display interface locating in the dialogue page; and
in response to a second operation instruction triggered based on the second operation control in the operation controls, display a reminder object corresponding to the second operation control in the information editing area, the object display interface locating in the dialogue page.

13. The apparatus as claimed in claim 12, further comprising:
a first deleting module, configured to:
in a case of displaying the reminder object corresponding to the first operation control in the information editing area, in response to a third operation instruction triggered based on the first operation control, delete the reminder object corresponding to the first operation control from the information editing area, the object display interface locating in the dialogue page; and
in a case of displaying the reminder object corresponding to the second operation control in the information editing area, in response to a fourth operation instruction triggered based on the second operation control, delete the reminder object corresponding to the second operation control from the information editing area, the object display interface locating in the dialogue page.

14. The apparatus as claimed in claim 12 or 13, wherein the page displaying module (1002; 1102) is configured to:
in a case of displaying the reminder object corresponding to the first operation control in the information editing area, display the first operation control in the object display interface in a preset state; and
in a case of display the reminder object corresponding to the second operation control in the information editing area, displaying the second operation control in the object display interface in the preset state.

15. A computer-readable storage medium having stored therein instructions that, when executed by a processor of an electronic device, causes the electronic device to perform the method for reminder object operation as claimed in any one of claims 1 to 10.
